# EUROPEAN PATENT APPLICATION

(11) **EP 4 282 997 A2**
(43) Date of publication of application: **29.11.2023**
(21) Application number: 23174776.7
(22) Date of filing: 23.05.2023
(51) Int. Cl.: C22B 3/08, C22B 3/22, C22B 3/38, C22B 3/44, C22B 7/00, C22B 3/00, C22B 26/10, C22B 26/12, C22B 47/00, B01D 11/02, C01D 15/06, C01D 15/08, C22B 3/24, C22B 3/42

(54) **STREAMLINED LITHIUM-ION BATTERY WASTE RECYCLING**

(30) Priority: 27.05.2022 US 202263365422 P; 27.05.2022 US 202217804337; 14.07.2022 US 202263368396 P
(71) Applicant: II-VI Delaware, Inc., Wilmington, DE 19890 (US)
(72) Inventor: Abrenica, Gomer, Wilmington, 19801 (US); Nazari, Ghazaleh, Wilmington, 19801 (US)
(74) Representative: Tegethoff, Sebastian

(57) **Abstract**

A process for recovering and purifying nickel (Ni), manganese (Mn), cobalt (Co), and lithium (Li) from black mass obtained from recycling of lithium-ion batteries to produce high purity products. The process may include reductive acid leaching, impurity removal, precipitation of valuable metals such as Ni, Co, Mn, and Li. The process may also include recycling of Li compounds as hydroxide or carbonate as a source of alkaline reagent for impurity removal and/or precipitation of the valuable metals.

## Description

### Field of the Disclosure

The present disclosure relates to a method of recovering valuable metals from black mass.

### Brief description of the related art

The demand for lithium-ion batteries (LiBs) is expected to grow to a large extent in several applications, particularly in connection with electric vehicles (EVs), over the next few years. Driven by rapid technological innovation, increasing environmental and energy concerns, favorable government policies, and growing demand from the renewable-energy sector, this massive conversion is accelerating. At this rate, the demand for LiBs could easily outpace the supply of battery-grade components, such as lithium (Li), cobalt (Co), and nickel (Ni), in the near future. Currently, the supply chain of these critical metals from primary sources reveals a range of risks including political, security, and business risks associated with their geographic concentration. To sustain the growth of the EV market, it is important to secure the source of raw materials.

In the current decade, scraps amounting to up to 10% of the production from gigafactories remain as the primary source of recyclable materials. Despite ongoing efforts in optimizing production lines to reduce such scraps, their quantity can still be significant even when end-of-life (EOL) EV batteries become available for recycling by 2030. The spent batteries that are presently available for recycling are mostly from consumer electronics. Most of these batteries are landfilled or disposed of in some other way because the related environmental regulations have not been fully developed or implemented in many countries. Additionally, they are highly dispersed in small quantities and scattered in different locations. With the coming surge in demand for LiBs in the EV market, the disposal of EOL batteries is expected to ramp up in the next few years. With proactive regulations regarding disposal and collection of spent batteries, recycling of LiB wastes could provide a significant and reliable supply of valuable metals.

Recycling of LiBs involves physical and chemical processes. At the end of their lives, LiBs may be collected and transferred to a recycling facility that employs mechanical separation methods. The batteries are first sorted and discharged to completely drain stored residual energy by known methods, such as using ohmic resistor or cryogenic/inert crushing. Then the batteries are dismantled either manually or by crushing the battery modules in a shredder and/or a mill. The granules thereby generated are sieved to separate material such as steel, plastic, aluminum, and copper from what is commonly referred to as "black mass."

Chemical pathways for processing black mass include pyrometallurgical and hydrometallurgical processes. Pyrometallurgy employs smelting as the core process step which is similar to that used in smelting of ores. This route presents significant hurdles such as high energy consumption, costly toxic gas treatment, and loss of Li to slag. Moreover, the recovered metals are in forms that are unsuitable for battery production and require additional processing to separate into individual metal compounds.

Most hydrometallurgical processes involve metals recovery by leaching, impurities removal, valuable metals separation, and purification of all the critical metals which entail complex process steps. Typically, the first step is leaching the metals from black mass. A common leaching agent is sulfuric acid (H₂SO₄) with hydrogen peroxide (H₂O₂) as the reducing agent. Reduction is required because of the presence of higher valence state species, such as Co³⁺ and Mn⁴⁺, in the black mass, formed during the charging-discharging cycle of the battery. Based on the Eh-pH solution chemistry of the metals, dissolution of higher valence states is lower relative to their lower valence states (Co²⁺ and Mn²⁺). Ni and, to some extent, Li are closely associated with Co and Mn; hence, their leaching efficiencies are affected by lower Co and Mn dissolution.

There are a number of studies on processes for recycling of LiB batteries. "A review of recycling spent lithium-ion battery cathode materials using hydrometallurgical treatments" by Jung, J. et al. (2021) and "State-of-the-art lithium-ion battery recycling technologies" by Kaya M. (2022) provide summaries of leaching parameters using reagents in a single-stage process. In most cases, the reaction temperature is higher than 70 °C. As temperature increases, acid leaching kinetics are improved. At higher temperature, however, decomposition of H₂O₂ is faster, resulting in loss and waste of its reductive power. A similar study was published by Prazanova, A. et al., "Literature Review, Recycling of Lithium-Ion Batteries from Electric Vehicles." There are few process development studies that suggest two-step leaching using different leaching agents in each step intending to preferentially leach Li and Cu in the first step, then the other metals in the second step.

Chabadhiya, K. et al., "Two-step leaching process and kinetics for an eco-friendly recycling of critical metals from spent Li-ion batteries," refers to a two-step process. In the first step, black mass from spent NMC was leached at 10% pulp density in 0.25M oxalic acid solution, dosed with H₂O₂ at 80 °C to selectively leach Li and Cu. After filtering the solution, the residue containing Ni, Mn, and Co as their corresponding oxalates was leached in 3M H₂SO₄ at 6% pulp density, dosed with H₂O₂ at 60 °C to dissolve Ni, Mn, and Co. There are many drawbacks to employing this process including (1) it requires oxalic acid which is expensive, (2) the recovery of Li from the oxalic acid solution requires solvent extraction, (3) leaching of Ni, Mn, and Co from their oxalate forms requires high acid concentration, (4) the leach solution containing Ni, Mn, Co, and oxalate ions was suggested to be processed via solvent extraction to separate the metals, and (5) the oxalate ions in wastewater may complicate its treatment. Overall, the process may require costly reagents and complex separation process steps which may be avoided in accordance with the present disclosure.

Copper (Cu), iron (Fe), and aluminum (Al) are common impurities in black mass. Cu is from the current collector of the anode, Al is from the current collector of the cathode, and Fe is from the stainless-steel case, all of which can exist as metallic species. The dissolution of Cu and Al metal by H₂SO₄ gives off two and three electrons, respectively, hence can act as reducing agents. The oxidation potential of H₂O₂ is above that of the metallic components; therefore, it can also oxidize and dissolve Al and Cu. When H₂O₂ is added during acid leaching, the metals may be rapidly oxidized resulting in loss of the reductive power of Al and Cu and overconsumption of H₂O₂. In other words, H₂O₂ may act as an oxidizing agent in the presence of Al and Cu instead of a reducing agent as intended.

The common impurities such as Fe, Al, and Cu in the leachate containing the valuable metals may be removed by processes such as chemical precipitation, ion exchange, solvent extraction, or combinations thereof. Chemical precipitation utilizes the differences in the solubility of metal compounds which are dependent on pH and temperature. The precipitating reagents that are commonly used are alkali hydroxides or carbonates. "Study on valuable metal incorporation in the Fe-Al precipitate during neutralization of LIB leach solution," published by Chernyaev, A. et al., reports an investigation at lab-scale of the use of NaOH and LiOH as neutralization reagents for impurities removal, and concluded that the latter resulted in 50% lower co-precipitation of Ni, Co, and Li.

According to "A Novel Closed-Loop Process for Recycling Spent Lithium-Ion Battery Cathode Materials," published in 2021 by Jung, et al., hydrometallurgical LiB recycling processes commonly use NaOH or sodium carbonate (Na₂CO₃) for impurity removal, metal extraction, and Li recovery, which results in a final solution containing large amounts of Na ions that potentially complicate the recycling process. To resolve this, the authors propose replacing these reagents with LiOH or Li₂CO₃ as the reagents. They reported the development of a closed-loop hydrometallurgical recycling process that employs a three-compartment electrodialysis cell for converting waste solutions containing lithium sulfate into pure LiOH and H₂SO₄ which can be reused.

According to another paper published by another set of authors including Jung in 2022, entitled "Electrodialysis of a Lithium Sulphate Solution: An Experimental Investigation," such equipment may have a dilute channel filled with a Li₂SO₄ solution and two concentrate channels separately filled with LiOH and H₂SO₄ solutions, and the channels are separated by cation-exchange and anion-exchange membranes, respectively. The authors reported high ion recovery ratios of Li⁺ and SO₄ - of 94.3 and 87.5%, respectively. The purity of the LiOH solution generated is high. Electrodialysis equipment and auxiliaries can entail high capital expenditures (CAPEX) and the process is highly energy-intensive and requires high maintenance cost, and therefore this is a disadvantageously costly process.

In a known hydrometallurgical processing route, solvent extraction is a process step which enables production of individual battery-grade metal sulfates. An example is referred to in German patent document DE 102018102026 A1 (Hanisch, C. et al.). The described systems are complex, sensitive in operation, and require multiple stages with high degrees of control. They also require effective systems for waste treatment, crud removal, organic vapor emission control, and fire suppression. As such, for implementation of these processes, many pieces of equipment and a large footprint, hence high capital expenditures, are required. Moreover, these processes consume high amounts of reagents, fuel, and electricity.

United States Patent No. 10,995,014 (Fraser, R.J. et al.) attempts to eliminate the separation step and above-mentioned issues by producing mixed metal sulfates. In a first process, the mixed metal sulfate solution is crystallized to generate mixed metal sulfate crystals and a mixed metal sulfate mother liquor. The mother liquor is reacted with a base to form the mixed metal hydroxides, which in turn are used as the reagent in the impurity removal upstream of crystallization. It has been found from experiments related to the present disclosure that, while crystallization of mixed metal sulfate can easily be performed, it is rather difficult to achieve the desired metal ratios. This is because crystallization relies on the solubility of the metal sulfates and each metal sulfate component has different solubilities. Additionally, crystallization is an energy intensive process. After crystallization, the salts are re-dissolved and precipitated as mixed metal hydroxide or carbonate to be used for battery cathode application.

International Patent Publication No. WO 2022/167622 (Mahmood, A. et al.) refers to a process of generating NMC hydroxide for use as a reagent for chemical precipitation of Fe and Al in an impurity removal step. In a co-precipitation process, a purified pregnant leach solution (PLS) is adjusted to pH of 8-9 which causes incomplete precipitation of Ni, Mn, and Co while keeping a portion of those metals along with other impurity ions in solution. After filtering off the precipitates, the solution thereby generated is adjusted to higher pH to completely precipitate the remaining metals as NMC hydroxide. According to WO 2022/167622, using NMC hydroxide as a reagent in the impurity removal step is preferred to avoid introduction of ionic impurities into the PLS. However, the concentrations of Ni, Mn, Co, and Li are governed by their solubility limit at different pH. Ni, Mn, Co hydroxide has low solubility at impurity removal pH 4-5, so by adding more NMC to the solution, the extent of precipitation increases which would lead to higher Ni, Mn, and Co losses.

Disadvantages of the prior art are overcome to a significant extent by the present disclosure.

### Summary of the Disclosure

The present disclosure relates to a method of recovering valuable metals from black mass, where the method includes the steps of acid leaching the black mass in a first stage, to produce acid-leached material, and applying a reducing agent to the acid-leached material in a second stage.

Thus, according to one aspect of the present disclosure, a two-stage leaching process is employed where acid leaching is employed in the first stage and a reducing agent such as H₂O₂ is added in the second stage. With the benefit of this two stage leaching process, one or more of the following advantages may be achieved: (1) the reductive power of impurity metals such as Cu and Al in the black mass may be taken advantage of; (2) H₂O₂ consumption may be reduced as a result of its efficient use in the second stage leaching where it is most needed; (3) conditions may be provided where H₂O₂ only acts as a reducing agent and not as an oxidizing agent; and (4) higher temperature in the first stage can be used to improve acid leaching kinetics and reduce the temperature in the second stage of leaching when H₂O₂ is added to reduce its decomposition.

The present disclosure also relates to a method of recovering valuable metals from black mass, where the method includes the steps of performing upstream processes on the black mass and using a Li basic solution as a reagent in one or more of the upstream processes.

Thus, according to another aspect of the present disclosure, a Li basic solution is used as a reagent in one or more upstream processes. With the benefit of this aspect of the present disclosure, one or more of the following advantages may be achieved: (1) the use of fresh alkali reagent in impurity removal, ion exchange (IX) resin regeneration, and mixed precipitation may be eliminated; (2) losses of the critical metals to the impurity precipitate during impurity removal by chemical precipitation may be minimized; (3) effective impurity removal by chemical precipitation may be achieved without introduction of a high level of Na that could contaminate the mixed precipitate product or require additional steps of purification (additionally, LiOH has high solubility in acidic pH and will not co-precipitate with impurities or NMC mixed ppt); (4) a Li-containing stream after mixed precipitation may be enriched with Li which minimizes the energy requirement for concentrating the solution prior to Li₂CO₃ precipitation; and (5) this closed loop process can maximize the recovery of Li.

Moreover, the streamlined process described herein can eliminate an unnecessary metals separation step of the recycling process and the metal sulfates dissolution step of the cathode precursor production. This may result in approximately 60% lower capital cost and 50% lower reagent and utility cost relative to known hydrometallurgical processes where Ni, Mn, and Co are separated, without reducing the quality of the product.

Further, in accordance with another aspect of the present disclosure, there is a process for recovering and purifying Ni, Mn, Co, and Li from black mass obtained from recycling of LiB waste to produce high purity products. The process includes: (i) acid leaching black mass to form an acidic pregnant leach solution (PLS) containing valuable metals such as Ni, Mn, Co, and Li and impurities, and an insoluble material, where the leaching process is a two-stage process including (a) acid leaching with an acid at suitable conditions and (b) reductive acid leaching with a reducing agent at suitable conditions; (ii) separating the acidic PLS and the insoluble material; (iii) adjusting the pH of the acidic PLS using a Li basic solution to form a pH-adjusted slurry including an impurity precipitate containing the impurities and a pH-adjusted PLS containing valuable metals such as Ni, Mn, Co, and Li; (iv) separating the pH-adjusted PLS and the impurity precipitate; (v) removing any residual impurities from the pH-adjusted PLS by adsorption using an ion exchange resin to form the purified PLS containing valuable metals such as Ni, Mn, Co, and Li, where such removing includes (a) eluting the adsorbed impurities from the ion-exchange resin using appropriate eluents and (b) regenerating the ion-exchange resin using the Li basic solution; (vi) adjusting the pH of the purified PLS containing valuable metals such as Ni, Mn, Co, and Li using a Li basic solution to form the mixed precipitate slurry; (vii) separating the mixed precipitate containing Ni, Mn, and Co, and a solution containing Li, where the mixed precipitate can be of high purity (up to battery-grade purity); and (viii) processing the solution containing Li to produce a Li basic solution for use in at least one of above-mentioned steps (iii), (v), and (vi), where the Li basic solution is impure LiOH or Li₂CO₃ solution.

According to one aspect of the present disclosure, solvent extraction circuits for separation of Mn, Co, and Ni can be advantageously bypassed. Such bypassing may provide a number of advantages, including one or more of the following: (a) reduced equipment cost; (b) reduced building footprint; (c) reduced reagent consumption; (d) reduced waste generation; and (e) improved plant safety.

According to another aspect of the present disclosure, two-stage leaching, including acid leaching followed by reductive leaching, may be employed. Such two-stage leaching may provide a number of advantages, including one or more of the following: (a) increasing Ni, Co, and Li recovery; and (b) reducing H₂O₂ consumption/reagent cost.

According to another aspect of the present disclosure, a Li basic solution may be used instead of NaOH, which may provide a number of advantages, including one or more of the following: (a) more efficient impurity removal/lower loss of Ni and Co; (b) avoidance of introduction of new impurity; (c) reduction of purification requirements; (d) reduction in the amount of wastewater generated; and (e) increased Li recovery.

### Summary of the Drawings

Fig. 1 is a process flow diagram for a streamlined hydrometallurgical advanced recycling process (SHARP) performed in accordance with the present disclosure;
Fig. 2 includes graphs showing precipitation of metals at different pH using NaOH and Li basic solution; and
Fig. 3 is a comparative process flow diagram showing pyrometallurgical and hydrometallurgical methods and a method of processing black mass in accordance with the present disclosure.

### Deatiles description of the disclosure

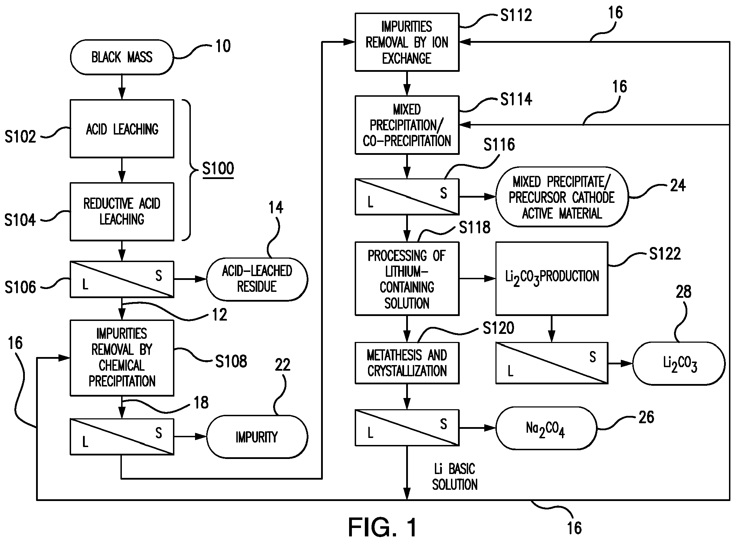

Referring now to the drawings, where like reference numerals designate like elements, the present disclosure relates to a process for recovering and purifying Ni, Mn, Co, and Li from black mass 10 (Fig. 1) for use in producing high purity products. If desired, the black mass 10 may be obtained from recycling of LiB waste.

In the example illustrated in Fig. 1, the process includes: (i) acid leaching black mass (S100) to form an acidic pregnant leach solution (PLS) containing valuable metals such as Ni, Mn, Co, and Li, and impurities, and an insoluble material, where the leaching process (S100) is a two-stage process including (a) acid leaching (S102) with an acid at suitable conditions and (b) reductive leaching (S104) with a reducing agent at suitable conditions; (ii) separating (S106) the acidic PLS 12 and the insoluble material or acid-leached residue 14; (iii) adjusting (S108) the pH of the acidic PLS 12 using a Li basic solution 16 to form a pH-adjusted slurry 18 including an impurity precipitate containing impurities and a pH-adjusted PLS containing valuable metals such as Ni, Mn, Co, and Li; and (iv) separating (S110) the pH adjusted PLS 20 and the impurity precipitate 22.

Further, the process illustrated in Fig. 1 includes: (v) removing (S112) any residual impurities from the pH adjusted PLS 20 by adsorption using an ion exchange resin to form the purified PLS containing valuable metals such as Ni, Mn, Co, and Li, where the removing step (S112) includes (a) eluting the adsorbed impurities from the ion-exchange resin using appropriate eluents and (b) regenerating the ion-exchange resin using the Li basic solution 16; (vi) adjusting (S 114) the pH of the purified PLS containing valuable metals such as Ni, Mn, Co, and Li using the Li basic solution 16 to form a mixed precipitate slurry; (vii) separating (S116) the mixed precipitate containing Ni, Mn, and Co, and a solution containing Li, where the mixed precipitate 24 can be of high purity (up to battery-grade purity) for use as a precursor cathode active material; and (viii) processing (S118) the solution containing Li to produce the Li basic solution 16 for use in steps (iii), (v), and (vi) (or in at least one of steps (iii), (v), and (vi)), where the Li basic solution 16 is impure LiOH or Li₂CO₃ solution.

The feedstock to the process (that is, the black mass 10) may be a mixture of cathode and anode materials from recycling of LiB waste or scraps. If desired, the LiB waste or scraps may include at least one of the LiB chemistries lithium iron phosphate (LFP), lithium cobalt oxide (LCO), lithium manganese oxide (LMO), lithium nickel manganese cobalt oxide (NMC), lithium nickel cobalt aluminum oxide (NCA), and lithium titanate (LTO). Further, the black mass 10 may include least one of the valuable metals Ni, Co, Mn, and Li, graphite (C), and at least one impurity such as iron (Fe), aluminum (Al), copper (Cu), phosphorous (P), calcium (Ca), magnesium (Mg), fluoride (F), zirconium (Zr), zinc (Zn), and rare earth elements (REE).

According to one aspect of the present disclosure, the leaching process (S100) is performed in two stages (S102, S104) to efficiently utilize the reducing power of Al and/or Cu metals and prevent overconsumption of H₂O₂. Firstly, the feedstock is mixed with acidic solution (S102) to dissolve at least a portion of Ni, Mn, Co, Li, and impurities. Suitable acids may include, but are not limited to, mineral acids including sulfuric acid, hydrochloric acid, and nitric acid. The amount of acid to be added may be more than the stoichiometric amount required to completely dissolve the Ni, Mn, Co, and Li, and impurities. The leaching may be carried out at a temperature equal to or less than the boiling point of the slurry, while the slurry is thoroughly mixed. A portion of at least one Ni, Mn, Co, and Li is dissolved in solution. The relatively low leaching efficiency of particularly Co and Mn are due to the formation of higher valence state species, such as Co³⁺ and Mn⁴⁺, during the charging-discharging cycle of the battery. Based on the Eh-pH solution chemistry of the metals, dissolution of higher valence states is lower relative to their lower valence states (Co²⁺ and Mn²⁺). Ni and, to some extent, Li are closely associated with Co and Mn; hence, their leaching efficiencies are affected by lower Co and Mn dissolution.

Then (after S102), the acidic slurry from the first stage of acid leaching may be cooled to a temperature suitable for an efficient reaction with the reducing agent (S104), preferably about 60-70 °C to reduce the rate of H₂O₂ decomposition. The reducing agent may include, but is not limited to, H₂O₂, sulfur dioxide, sodium bisulfite, or sodium metabisulfite. The amount of the reducing agent may be more than the stoichiometric amount required to reduce the oxidized valuable metals particularly Co³⁺ to Co²⁺ and Mn⁴⁺ to Mn²⁺ while the solution is thoroughly mixed. Any undissolved valuable metals and impurities may be partially present in the insoluble material. Separation (S106) of the acidic PLS and the insoluble material 14 may be accomplished by known methods such as gravitational settling, decantation, filtration, centrifugation, or any other appropriate method.

The insoluble material 14 may contain graphite and may be further purified and regenerated to form a saleable (marketable) product or reused in the process as adsorber for organics.

In operation, the acidic PLS containing Ni, Mn, Co, and Li, and impurities may be added with a suitable alkali reagent to precipitate at least a portion of one or more impurities including, but not limited to, Al, Cu, Fe, P, and Zr. Li basic solution 16 can be preferentially used to reduce the introduction of impurities that could occur when using other alkali reagents such as NaOH, Na₂CO₃, calcium hydroxide, potassium carbonate (K₂CO₃), potassium hydroxide (KOH) or costly reagents such as Li₂CO₃, or LiOH. The pH-adjusted slurry 18 that is formed includes an impurity precipitate 22 and a pH-adjusted PLS 20 containing Ni, Mn, Co, and Li, and residual impurities which may be separated by suitable methods such as gravitational settling, decantation, filtration, centrifugation, or any other appropriate method.

If desired, the residual impurities in the pH-adjusted PLS 20 may be removed by ion exchange (S 1 12) using a suitable ion exchange resin. The removal of residual impurities, particularly Al and Cu, from the pH-adjusted PLS may be completed without significant co-adsorption of Ni, Mn, Co, and Li. The adsorbed impurities may be eluted from the resin by suitable eluents. The eluted resin may be regenerated by an alkali reagent in solution form. The regenerant can be the Li basic solution 16 containing Li from the process to reduce introduction of new impurities to the solution. The regenerated resin may be reused.

The recovery of valuable metals such as Ni, Mn, and Co from the purified PLS may be performed by adjusting the pH using an alkali reagent. The alkali reagent may be Li basic solution 16 to reduce the introduction of impurities that would have been introduced at high levels by using other basic reagents such as Na₂CO₃, K₂CO₃, NaOH, or KOH or by using other alkali reagents such as Li₂CO₃, or LiOH that are costly. When an alkali carbonate is used, the pH of precipitation may be at least 6 and up to 9, or at least 6.5 and up to 8.5, or at least 7 up to 8, whereas when an alkali hydroxide is used, the pH of precipitation may be at least 7 and up to 13, or at least 10.5 and up to 12.5, or at least 11 and up to 12.

If desired, the precipitation (S 114) may be carried out at a temperature equal to or less than the boiling point of the slurry while the slurry is thoroughly mixed. The mixed or co-precipitation process may be in batch or continuous mode. Optionally, the precipitation may employ a co-precipitation process using a chelating agent such as ammonium hydroxide. The mixed precipitate slurry that is formed includes a mixed precipitate 24 containing Ni, Mn, and Co, and a solution containing Li, which can be separated by suitable methods (S 1 16) such as gravitational settling, decantation, filtration, centrifugation, or any other appropriate method.

The solution containing Li may be further processed (S 1 18) to recover Li basic solution 16 to be used as a reagent for at least one of the frontend processes illustrated in Fig. 1, including one or more of the following: (i) converting (S122) a portion of the concentrated Li solution into Li₂CO₃ by reacting stoichiometrically with Na₂CO₃, if production of Li₂CO₃ as Li basic solution or final product is intended; (ii) further purifying the generated Li₂CO₃ 28 if it is intended to be used as a final product for industrial or battery-grade applications; (iii) converting a portion of the concentrated Li solution into a solution of LiOH and sodium sulfate (Na₂SO₄) by metathetically reacting with NaOH (S 120); (iv) crystallizing Na₂SO₄ through evaporative crystallization or cooling crystallization (S120); (v) separating the crystallized Na₂SO₄ 26 and the mother liquor containing LiOH and soluble Na₂SO₄ by suitable methods such as gravitational settling, decantation, filtration, centrifugation, or any other appropriate methods, where the mother liquor is the Li basic solution 16; and (vi) further purifying the generated LiOH if it is intended to be used as a final product for industrial or battery-grade applications.

The following examples (Comparative Tests 1 and 2) are illustrative of processes in accordance with the present disclosure:
Comparative Test 1: Two-stage leaching - acid leaching followed by reductive leaching, compared with single-stage leaching where acid leaching and reduction take place simultaneously.

A black mass sample 1 having the composition shown in Table 1 was considered in the comparative leaching tests. The leaching was done in an 800-mL beaker using an overhead agitator and an electrically heated hotplate. The reagents used were analytical grade 98 %wt H₂SO₄ from Merck and industrial grade 50 %wt H₂O₂ solution. About 50 g of the black mass on dry basis was used in each test parameter employed. The amount of H₂SO₄ was 20% in excess of the stoichiometric requirement to form corresponding sulfates of Ni, Co, Mn, Li, Al, Cu, and Fe. The amount of H₂O₂ used was the same for each case.

For the two-stage leaching, the black mass was first leached in H₂SO₄ solution at 80-90 °C for 2 hours. A sample of the slurry was taken for analysis to determine the quantity of metals, particularly Co and Mn, left in the residue. The amount of H₂O₂ was calculated based on amount of residual Co and Mn. The acid-leached slurry was cooled to 55-65 °C in preparation for the reduction step. H₂O₂ was added into the slurry via a peristaltic pump at a rate of 1 mL/min.

For the one-stage leaching, the black mass was leached in a solution of H₂SO₄ and H₂O₂ at two different temperatures for 2 hours. The same amount of H₂O₂ as calculated in the two-stage leaching was used. A sample of the slurry was taken for analysis.

All samples were filtered using Whatman 41. The solutions and residues were prepared according to established procedures and analyzed using Agilent 5110 ICP-OES.

**Table 1: Comparison between Two-Stage Leaching and One-Stage Leaching of Black Mass Sample 1**

| Metal | Black Mass Composition | Extent of Leaching | | | |
|---|---|---|---|---|---|
| | | Two-Stage Leaching | | One-Stage Reductive Acid Leaching @ 80-90 °C | One-Stage Reductive Acid Leaching @ 55-65 °C |
| | | Stage 1 - Acid Leaching @ 80-90 °C | Stage 2 - Reductive Leaching @ 55-65 °C | | |
| Mn | 11.5% | 44% | >99% | 78% | 75% |
| Co | 10.3% | 86% | >99% | 81% | 77% |
| Ni | 22.5% | 87% | >99% | 83% | 69% |
| Li | 5.8% | 97% | >99% | 94% | 90% |
| Al | 2.0% | 98% | >99% | 98% | 97% |
| Cu | 8.6% | 90% | >99% | 96% | 99% |
| Fe | 0.01% | 57% | >99% | 99% | 99% |

The relatively low leaching efficiency of Co and Mn in Stage 1 is attributed to the presence of higher valence state species, including Co³⁺ and Mn⁴⁺, from the charging-discharging cycle of the battery. The solubility of these higher valence states is lower relative to their lower valence states (Co²⁺ and Mn²⁺). Ni and, to some extent, Li are closely associated with Co and Mn; hence, their leaching efficiencies can be affected. At the same time, Al, Cu, and Fe can be present in the black mass as metals, and their dissolution by the acid releases corresponding electrons that can reduce Co³⁺ and Mn⁴⁺, according to the half-cell reactions shown in Table 2.

**Table 2: Reduction Potentials of Metals and Reducing Agent at 30C (V vs. SHE)**

| Half-Cell Reaction | Reduction potential, V |
|---|---|
| Co³⁺ + e⁻ → Co²⁺ | 1.97 |
| H₂O₂ + 2H⁺ +2e⁻ →2H₂O | 1.76 |
| MnO₂ + 4H⁺ + 2e⁻ → Mn²⁺ + 2H₂O | 1.23 |
| Fe³⁺ + e⁻ → Fe²⁺ | 0.77 |
| O₂ + H⁺ +e⁻ → 2H₂O₂ | 0.69 |
| Cu²⁺ + 2e⁻ → Cu | 0.34 |
| Fe²⁺ + 2e⁻ → Fe | -0.44 |
| Al³⁺ + 3e⁻ → Al | -1.68 |

Known leaching systems for black mass are performed in a single step, that is, the black mass is reacted with the mixture of the lixiviant and the reducing agent. Shown in Table 1, when one-step reductive acid leaching is done, the extent of leaching of particularly Co and Mn were lower at the same amount of H₂O₂ used in the two-stage leaching given the overall same amount of reaction time.

The one-step leaching system at 80-90 °C could have suffered either or both of the following causes of inefficient use of H₂O₂. With high temperature, the rate of decomposition of H₂O₂ is very fast. Also, H₂O₂ can act as both a reducing agent and an oxidizing agent in the leaching system. Having an oxidation potential above that of Al, Cu, and Fe (including Fe²⁺ which also holds a reductive power), it can rapidly react with and oxidize the metals. Therefore, when H₂O₂ is added in one step with the acid, the reductive power of the metals would not be utilized by Co³⁺ and Mn⁴⁺, which in turn can result in unnecessary over-consumption of H₂O₂. The latter cause could be more prevalent in one-step leaching systems at lower temperature.

### Comparative Test 2: Impurity Removal by Chemical Precipitation using NaOH and Li Basic Solution

An objective of the impurity removal via chemical precipitation step (see Fig. 1, S108) is to remove all the Fe and most of Al and Cu in one step without substantially precipitating any of the critical metals. Laboratory experiments were conducted to evaluate the behavior of the metals at different pH using NaOH and Li basic solution as neutralizing agents. About 150 mL of the PLS from the leaching of black mass sample 1 was added to the reagent at different pHs at ambient temperature. The acidic PLS contained 13,000 ppm Mn, 12,000 ppm Co, 23,000 ppm Ni, 6,000 ppm Li, 2,000 ppm Al, 7,000 ppm Cu, and 15 ppm Fe. A stabilization period of 30 minutes at the pH was allowed prior to taking a sample for analysis. The samples were filtered using Whatman 41 filter paper and analyzed using Agilent 5110 ICP-OES. The pH meter was a Thermo Scientific Orion Star A211 pH meter.

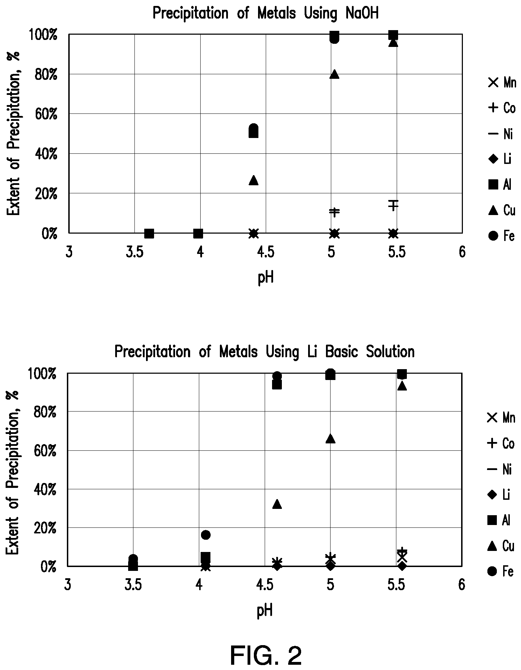

Fig. 2 shows the results of the tests conducted. Understandably, because the Fe concentration is very low in the PLS, the onset of its precipitation was found to be at pH 4 attaining complete precipitation at pH 4. With the relatively higher concentration of Al in the PLS, on the other hand, it almost approached complete precipitation at pH 4.5, with minimal co-precipitation of Co, Mn, and/or Ni. At full precipitation of Al, for example at pH 5.5, the co-precipitation of Co, Mn, and Ni when Li basic solution was used was significantly lower than when NaOH was used at the same pH. This means the residual Al and Cu in the PLS can be further minimized, which could lead to relatively longer breakthrough and exhaustion of the IX resin and ultimately lower frequency of elution, thus lower associated reagent cost. Also, Li remained in the solution all throughout the pH range tested as expected because Li as the hydroxide is very soluble. Further, as shown in Fig. 2, the complete precipitation of Al can happen between pH 4.5 and 5, while Cu precipitates at about pH 6. At full precipitation of Al, for example at pH 5.5, the co-precipitation of Co, Mn and Ni was significantly lower than when NaOH was used at the same pH. Again, Li remained in the solution throughout the pH range tested as expected because Li as the hydroxide is very soluble.

### Comparative Test 3: Mixed Metal Precipitation using NaOH and Li Basic Solution

An acidic PLS with total Ni, Mn, and Co concentrations [TM] of 1 molar obtained by leaching black mass sample 1 was prepared. The PLS was split into two parts. The first part went through impurity removal, and mixed precipitation steps using Li basic solution. The second part used NaOH. All parameters such as agitation, temperature, rate of addition, reaction time, and pH were the same for both tests.

The precipitates generated were washed with the same amount of deionized water. The washing was collected and measured for conductivity using Thermo Scientific Orion A Star Conductivity Meter and analyzed for Na and Li to monitor the extent of washing. The results are shown in Table 3.

**Table 3: Mixed Precipitate Generated by using Li Basic Solution as Reagent**

| Reagent | PLS after Impurity Removal | | PLS after Mixed Precipitation | | Mixed Precipitate | |
|---|---|---|---|---|---|---|
| | Na, gpL | Li, gpL | Na, gpL | Li, gpL | Na, ppm | Li, ppm |
| Li basic solution | 13 | 13 | 20 | 15 | 37 | 87 |

The required amount of water to wash the precipitate to reach the same level of Na impurity was significantly higher in the test where NaOH was used as a precipitating agent. It was estimated that by using Li basic solution, there would be at least 50% reduction in evaporation duty of wastewater. In effect, this also means relatively smaller equipment capacity requirement and lower energy consumption.

The results in Table 3 show that in the presence of a high concentration of Li, mixed Ni, Mn, and Co precipitate was produced with minimal amount of Li. A study by Jo, M. et al. (2018), "Effects of Residual Lithium in the precursors of Li[Ni_{1/3}Co_{1/3}Mn_{1/3}]O₂ on their lithium-ion battery performance," reported the involuntary introduction of Li to the precursors during co-precipitation of Ni, Mn, and Co in the presence of Li in solution. Jo, M. et al. observed undesirable cation mixing with the increasing Li content of the precursors. The results in Table 3 show that inclusion of Li in the mixed precipitate can be minimal by applying parameters according to the present disclosure even in the presence of high concentration of Li. It is believed that by applying the process parameters of the present disclosure, almost all Li is adsorbed on the surface of particles rather than inserted into the crystal structure which can be removed by washing.

### Test 4. Processing of Black Mass Sample 1

A process in accordance with the present disclosure was tested on a sample of black mass from acid leaching to mixed precipitation. About 225 g of the black mass sample 1 having the composition shown in Table 4 was leached via the above-described two-stage leaching (see Fig. 1, S100). After separating the insoluble materials, the PLS was then adjusted to pH 4.5-4.7 at 30-40 °C using the Li basic solution generated from a previous experiment. The resulting slurry was filtered to separate the pH-adjusted PLS and the impurity precipitate. The pH-adjusted PLS was then fed to an ion exchange column containing a suitable resin for adsorption of the residual Al and Cu. The raffinate, or the purified PLS, was adjusted with the Li basic solution to precipitate all the valuable metals Co, Mn, and Ni, which was at a pH of 11-11.5. The resulting slurry was filtered to separate the Li-containing solution from the mixed precipitate. The mixed precipitate was then washed and dried.

The Li-containing solution was processed to produce Li₂CO₃ and Li basic solution.

**Table 4: Analysis of a black mass Sample 1 and resulting leachate, purified solution, and mixed metal precipitate**

| Composition | Black Mass Sample 1 | Leachate (mixed metal solution) | Purified mixed metal solution | Mixed metal precipitate |
|---|---|---|---|---|
| Ni: Mn: Co | 0.5 : 0.3 : 0.2 | - | - | 0.5 : 0.3 : 0.2 |
| Li | 5.85% | 8.9 gpL | 12.7 gpL | 0.01% |
| Al | 20,000 ppm | 2,900 ppm | < 1 ppm | < 15 ppm |
| Cu | 86,000 ppm | 11,400 ppm | < 1 ppm | < 5 ppm |
| Fe | 70 ppm | 23.4 ppm | < 1 ppm | < 10 ppm |
| Na | 700 ppm | 80 ppm | 6,100 ppm | < 120 ppm |

As shown in Table 4, the mixed metal precipitate produced in Test 4 has a similar composition as the infeed in terms of metal ratios. As a result, the mixed metal precipitate can be advantageously employed directly in the production of a cathode precursor. Fe, Al, and Cu concentrations in the purified solution and the mixed precipitate are low. The Na and Li contents are within an acceptable range according to known specifications. In these experiments, Ni, Mn, and Co concentrations were not adjusted. Alternatively, the concentrations can be adjusted to reach the desirable Ni: Mn: Co.

### Test 5. Processing of Black Mass Sample 2

The same procedure as in Test 4 was employed in the processing of black mass sample 2. The results are shown in Table 5.

**Table 5: Analysis of black mass Sample 2 and resulting leachate, purified solution, and mixed metal precipitate**

| Composition | Black mass | Leachate (mixed metal solution) | Purified mixed metal solution | Mixed metal precipitate |
|---|---|---|---|---|
| Ni: Mn: Co | 0.5 : 0.2 : 0.2 | - | - | 0.5 : 0.2 : 0.2 |
| Li | 4.50% | 5 gpL | 17.9 gpL | 0.007% |
| Al | 4,000 ppm | 400 ppm | < 1 ppm | < 20 ppm |
| Cu | 3,000 ppm | 400 ppm | < 1 ppm | < 0.02 ppm |
| Fe | 5,000 ppm | 600 ppm | < 1 ppm | < 0.02 ppm |
| Na | 800 ppm | 2,000 ppm | 2,000 ppm | 137 ppm |

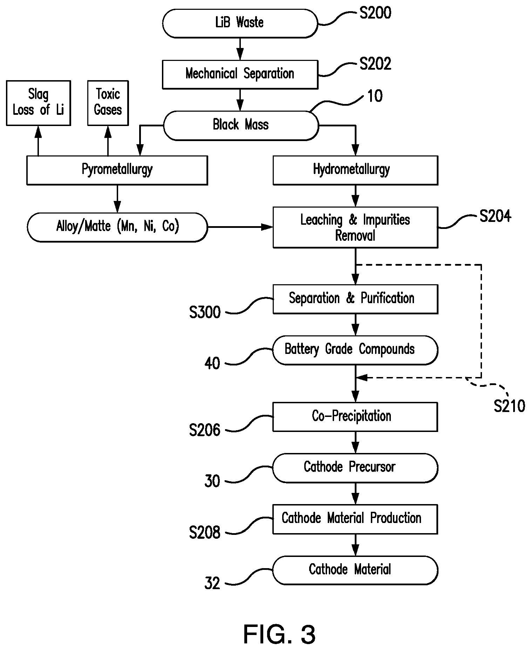

Fig. 3 provides a schematic comparison between three methods: (1) a hydrometallurgical method of producing a cathode material in accordance with the present disclosure; (2) a pyrometallurgical process; and (3) another hydrometallurgical process. The method according to the present disclosure includes providing LiB waste (S200), performing mechanical separation (S202) to obtain black mass 10, leaching and removing impurities (S204), and performing a co-precipitation step (S206) to produce a cathode precursor 30, followed by cathode material production (S208) to produce the cathode material 32. As schematically illustrated in Fig. 3, the method according to the present disclosure does not lose Li to slag or generate toxic gas as occurs in the pyrometallurgical process. Moreover, as schematically illustrated in Fig. 3, the method according to the present disclosure bypasses (S210), that is, does not include, separation and purification steps (S300) to produce battery grade components 40. Such separation and purification steps (S300) are costly aspects of the other hydrometallurgical process illustrated in Fig. 3, which may be avoided by performing the method according to the present disclosure.

As used herein, unless otherwise specified, all numbers such as those expressing values, ranges, amounts or percentages may be read as if prefaced by the word "about," even if the term does not expressly appear. Any numerical range recited herein is intended to include all sub-ranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1. Plural encompasses singular and vice versa. When ranges are given, any endpoints of those ranges and/or numbers within those ranges can be combined within the scope of the present disclosure. "Including," "such as," "for example," and like terms means "including/such as/for example but not limited to."

The methods recited in the claims which follow should not be limited by the order in which steps are listed.

## Claims

1. A method of recovering lithium-ion battery materials from black mass, wherein the method comprises:
- acid leaching the black mass in a first stage to produce acid-leached material; and
- subsequently, applying a reducing agent to the acid-leached material in a second stage.

2. The method of claim 1, wherein the reducing agent includes hydrogen peroxide (H₂O₂).

3. The method of claim 1, wherein the black mass may include copper (Cu) and aluminum (Al) impurities, and wherein the copper and aluminum impurities can act as reducing agents in the first stage.

4. The method of claim 1, wherein the first stage is performed at a first temperature and the second stage is performed at a second temperature, and the second temperature is lower than the first temperature.

5. The method of claim 1, wherein valuable metals recovered by the method include one or more of nickel (Ni), manganese (Mn), cobalt (Co), and lithium (Li).

6. A method of recovering valuable metals from black mass, wherein the method comprises:
- performing upstream processes on the black mass; and
- using a Li basic solution as a reagent in one or more of the upstream processes.

7. The method of claim 6, wherein the upstream processes include one or more of impurity removal by chemical precipitation, impurity removal by ion exchange, and mixed or co-precipitation.

8. The method of claim 6, further comprising an impurity removal step, and wherein the use of the Li basic solution reduces loss of one or more of Ni, Mn, Co, and Li during the impurity removal step.

9. The method of claim 6, wherein the Li basic solution includes an impure solution of lithium hydroxide (LiOH).

10. The method of claim 6, wherein the Li basic solution includes an impure solution of lithium carbonate (Li₂CO₃).

11. A process for recovering and purifying valuable metals from black mass obtained from recycling of lithium-ion batteries, wherein the valuable metals include one or more of Ni, Mn, Co, and Li, and wherein the process comprises:
a) leaching the black mass to form an acid leached slurry including an acidic pregnant leach solution (PLS) containing the valuable metals and impurities, and an insoluble material;
b) separating the acidic PLS and the insoluble material;
c) adjusting the pH of the acidic PLS for impurity removal to form a pH-adjusted slurry including an impurity precipitate containing the impurities and a pH-adjusted PLS containing the one or more of Ni, Mn, Co, and Li;
d) separating the pH-adjusted PLS and the impurity precipitate;
e) removing residual impurities from the pH-adjusted PLS by adsorption using an ion exchange resin to form a purified PLS containing the valuable metals, wherein the removing includes eluting the adsorbed impurities from the ion-exchange resin using an eluent and regenerating the ion-exchange resin;
f) adjusting the pH of the purified PLS containing the valuable metals using a Li basic solution to form the mixed precipitate slurry, wherein the concentrations of the valuable metals may be adjusted according to the ratio required for a product by adding corresponding sulfates;
g) separating the mixed precipitate containing the valuable metals and a solution containing Li;
h) processing the solution containing Li to produce a basic solution for use in at least one of steps (c), (e), and/or (f); and
i) recovering Li as high-purity Li₂CO₃ or high-purity LiOH.

12. The process of claim 11 wherein the black mass includes the valuable metals, graphite, and at least one of iron (Fe), Al, and Cu.

13. The process of claim 11 wherein the leaching includes a two-stage leaching process including acid leaching with an acid at suitable conditions and reductive leaching with a reducing agent at suitable conditions.

14. The process of claim 13 in which the acid includes sulfuric acid and the reducing agent includes hydrogen peroxide (H₂O₂).

15. The process of claim 11 in which the reagent for adjusting the pH includes the Li basic solution.

16. The process of claim 11 in which the reagent for regenerating the ion exchange resin includes the Li basic solution.

17. The process of claim 11 in which the reagent for mixed precipitation includes the Li basic solution.

18. The process of claim 15, wherein the Li basic solution includes an impure solution of LiOH.

19. The process of claim 16, wherein the Li basic solution includes an impure solution of LiOH.

20. The process of claim 17, wherein the Li basic solution includes an impure solution of LiOH.
